# EUROPEAN PATENT SPECIFICATION

(11) **EP 3 211 042 B1**
(45) Date of publication and mention of the grant of the patent: **26.06.2019**
(21) Application number: 17162565.0
(22) Date of filing: 03.08.2012
(51) Int. Cl.: C09B 47/067

(54) **PHTHALOCYANINE SYNTHESIS**
PHTHALOCYANINSYNTHESE
SYNTHÈSE DE PHTALOCYANINE

(30) Priority: 03.08.2011 US 201161514527 P
(43) Date of publication of application: 30.08.2017
(62) Divisional of application: 12746244.8
(73) Proprietor: Sun Chemical Corporation, Parsippany, NJ 07054 (US)
(72) Inventor: SMITH, Norman W., Cincinnati, OH Ohio 45244 (US); MERCHAK, Paul A., Loveland, OH Ohio 45140 (US)
(74) Representative: Vossius & Partner Patentanwälte Rechtsanwälte mbB

(56) References cited:
- US-A- 2 302 612
- US-A- 3 763 182
- US-A1- 2009 247 742
- US-A1- 2010 207 114
- US-A1- 2010 240 885

## Description

### RELATED APPLICATION

Benefit of priority is claimed to U.S. Provisional Application Serial No. 61/514,527, to Norman W. Smith and Paul A. Merchak, filed on August 3, 2011, entitled "PHTHALOCYANINE SYNTHESIS."

### FIELD OF INVENTION

Methods for preparing phthalocyanines in high yield without the use of a heavy metal catalyst are provided. Methods for preparing pigmentary phthalocyanine products that are substantially free from or only contain trace amounts of heavy metal impurities are also provided. The provided methods produce phthalocyanine pigments that can be used in any application that utilizes phthalocyanine pigments, such as in dispersions, printing inks, paints, plastics and coatings.

### BACKGROUND

Phthalocyanine compounds are highly stable 18 π-electron-conjugated macrocycles that exhibit intense, bright colors, and are represented by the following general formula: 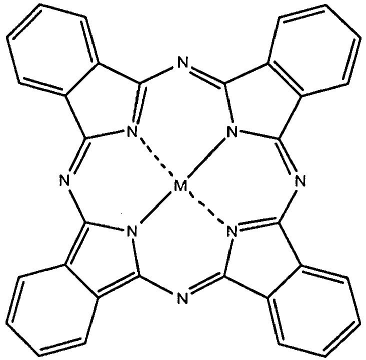 Phthalocyanines, which include metal-phthalocyanine coordination compounds (*i.e*., M is an atom or atoms capable of bonding to the central cavity of a phthalocyanine molecule and can have the capability to attach axial ligands) and metal-free phthalocyanines (*i.e*., M is H), are frequently used as dyes or pigments in the textile and paper industries, and have also been used as chemical sensors, photodynamic cancer drugs, nonlinear optical materials, catalysts and liquid crystals.

Phthalocyanines are formed upon heating a phthalic acid derivative, such as phthalic anhydride, phthalimide, phthalonitrile or o-cyanobenzamide, with a nitrogen source, such as urea, in cases where the phthalic acid derivative does not itself contain sufficient nitrogen. The synthesis of metal phthalocyanine coordination compounds additionally requires the presence of an appropriate metal derivative. Metal phthalocyanines are commonly synthesized following one of two methods. One common method utilizes either phthalimide or phthalic anhydride (as a precursor to phthalimide) as the starting material, while the other method starts with phthalonitrile. Both methods involve the simultaneous synthesis of the ligand with formation of the metal complex.

In general, to synthesize a metal phthalocyanine from phthalic anhydride, phthalic anhydride is heated with urea, a metal halide such as aluminum(III) chloride (AlCl₃) and a small amount of a catalyst, such as a molybdenum compound, in a high-boiling solvent, with urea acting as the source of nitrogen. The presence of the molybdenum is essential in these reactions to catalyze the formation of a key intermediate, 1-amino-3-iminoiso-indoline. The use of phthalic anhydride as the starting material in the synthesis of the metal phthalocyanine pigment chloroaluminum phthalocyanine is described in Huanshun et al., "Metal phthalocyanine solid phase synthesis," Ranliao Yu Ranse 41(3):150-152 (2004); Chinese Patent No. CN101717401; Japanese Pub. Nos. JP 2003-176424, JP 2003-176423; Japanese Patent No. JP 4407097; and U.S. Patent No. 6,826,001. These procedures all involve the use of catalytic quantities of molybdenum, typically ammonium molybdate, molybdic oxide, or another similar molybdenum compound. It is often very difficult, if not impossible, to remove all traces of the metal from the final pigment, resulting in the presence of trace to low percentage levels of molybdenum. This is especially disadvantageous for environmental reasons, such as during treatment of process wastewater resulting from the manufacture of phthalocyanine pigments and during the recycling process when deinking materials printed with inks.

The other method commonly used to synthesize metal phthalocyanines starts with phthalonitrile and involves heating the phthalonitrile to around 200°C with a metal halide such as AlCl₃, with or without a solvent. For example, a process to synthesize chloroaluminum phthalocyanine using C₁-C₁₀ alcohols, for example ethanol, as the solvent gave only 68% yield (see *e.g*., Russian Patent No. RU 2164233), and a method that involves heating phthalonitrile in water at 180°C in the presence of AlCl₃ is described as violently vigorous and resulted in only a 70% yield (see *e.g*., Japanese Patent No. JP 62-158284). Much lower yields were obtained when the reaction also involved the use of ammonia. A complex of ammonia and aluminum chloride was allowed to form before heating with phthalonitrile, resulting in a 47% yield of the chloroaluminum phthalocyanine (see *e.g*., Japanese Patent No. JP 2000-1270885).

As an alternative to the two methods described above, metal phthalocyanines also can be prepared by substitution (*i.e*., transmetallation) reactions. For example, chloroaluminum phthalocyanine can be prepared from a different metal phthalocyanine, such as copper phthalocyanine. In these reactions, the metal (*e.g*., copper) is replaced with aluminum by heating copper phthalocyanine in molten AlCl₃ and NaCl to 240°C for six hours (see *e.g*., EP Pat. No. 0 635 550 and U.S. Pat. No. 5,556,966). However, the final product can contain unreacted copper phthalocyanine, thus raising similar environmental concerns as the phthalocyanines prepared using metal catalysts.

A need therefore exists for an efficient process for synthesizing phthalocyanine pigments, such as metal phthalocyanine pigments, particularly chloroaluminum phthalocyanine pigments, that result in high yield, thus reducing waste. Another need exists for a method of synthesizing pure phthalocyanine pigments that is substantially free from heavy metal impurities and thus not harmful to the environment.

### SUMMARY

Provided herein are methods for the efficient and economical synthesis of pigmentary phthalocyanine products that do not involve the use of a heavy metal catalyst. The pigments can be used in any application that utilizes phthalocyanine pigments, such as in dispersions, printing inks, paints, plastics and coatings. Also provided are methods for synthesizing phthalocyanine pigments that are substantially free from heavy metal impurities and thus not harmful to the environment.

### DETAILED DESCRIPTION

A. Definitions
B. Preparation of phthalocyanines
   1. Reaction mixture
      a. Phthalonitrile
      b. Metal halide
      c. Ammonium salt
      d. Solvent
      e. Exemplary reaction mixtures
         1) Ammonium chloride
         2) Ammonium sulfate
         3) Ammonium acetate
         4) Salt combinations
   2. Exemplary methods
      a. Preparation of a crude phthalocyanine reaction product
      b. Purification of the crude phthalocyanine reaction product to obtain a purified reaction product
      c. Pigmentation process to obtain a milled phthalocyanine reaction product
      d. Purification of the milled phthalocyanine reaction product to obtain a pigmentary phthalocyanine product
C. Examples

### A. DEFINITIONS

The definitions of the technical and scientific terms provided herein encompass definitions intended at the time. These definitions are not meant to be restrictive, as there can be other aspects to the definitions that are not recited, such as those commonly understood by one of skill in the art to which the invention(s) belong. All patents, patent applications, published applications and publications, websites and other published materials referred to throughout the entire disclosure herein, unless noted otherwise, are incorporated by reference in their entirety. In the event that there are pluralities of definitions for terms herein, those in this section prevail.

It is to be understood that both the foregoing general description and the following detailed description are exemplary and explanatory only and are not restrictive of the subject matter claimed. In this application, the use of the singular includes the plural unless specifically stated otherwise. In this application, the use of "or" means "and/or" unless stated otherwise. Furthermore, use of the term "including" as well as other forms, such as "includes," and "included" is not limiting.

As used herein, ranges and amounts can be expressed as "about" a particular value or range. "About" also includes the exact amount. Hence "about 10%" means "about 10%" and also "10%."

As used herein, "optional" or "optionally" means that the subsequently described event or circumstance does or does not occur, and that the description includes instances where the event or circumstance occurs and instances where it does not. For example, an optionally substituted group means that the group is unsubstituted or is substituted.

As used herein, the singular forms "a," "an" and "the" include plural referents unless the context clearly dictates otherwise. Thus, for example, reference to a composition or reaction mixture comprising "a solvent" includes compositions and reaction mixtures with one or a plurality of solvents.

As used herein, a "combination" refers to any association between two or more items. The association can be spatial or refer to the use of the two or more items for a common purpose.

As used herein, a "composition" refers to any mixture of two or more products or compounds (*e.g*., solvents, resins, additives, etc.). It can be a solution, a suspension, liquid, powder, a paste, aqueous or non-aqueous formulations or any combination thereof.

As used herein, a "heavy metal catalyst" refers to any compound, such as an element, salt or complex, that catalyzes the formation of a phthalocyanine and contains a heavy metal. As used herein, "heavy metal" refers to any metal or semimetal (metalloid) that is associated with contamination or toxicity, such as a transition metal, a metalloid, a lanthanide, or an actinide. Exemplary heavy metals include platinum, palladium, osmium, ruthenium, rhodium, iridium; rhenium, scandium, cerium, samarium, yttrium, ytterbium, lutetium, cobalt, titanium, chromium, copper, iron, nickel, manganese, tin, mercury, silver, gold, zinc, vanadium, tungsten and molybdenum. Heavy metal catalysts can be used to catalyze the formation of a phthalocyanine but do not become incorporated into the purified phthalocyanine.

As used herein, "free of heavy metal" means that the amount of heavy metal in a pigment, composition, or mixture is 0 ppm.

As used herein, "substantially free of heavy metal" means that the amount of heavy metal in a pigment, composition, or mixture is less than about or at 500 ppm.

As used herein, "isomer mix" refers to any mixture of two or more isomers. It can be a solution, suspension, liquid, powder, paste, aqueous or non-aqueous formulation or any combination thereof. For example, "dichlorotoluenes (isomer mix)" as used herein refers to a mixture of two or more isomers of dichlorotoluene, such as 2,3-dichlorotoluene, 2,4-dichlorotoluene, 2,5-dichlorotoluene, 2,6-dichlorotoluene, and any combination thereof.

As used herein, "room temperature" refers to at or about 20°C.

As used herein, the term "alkyl" refers to straight or branched chain substituted or unsubstituted hydrocarbon groups. Exemplary alkyls contain 1 to 30 carbon atoms (whenever it appears herein, a numerical range such as "1 to 30" refers to each integer in the given range; *e.g*., "1 to 30 carbon atoms" means that an alkyl group can contain only 1 carbon atom, 2 carbon atoms, 3 carbon atoms, *etc*., up to and including 30 carbon atoms. An alkyl can be designated as "C₁-C₄ alkyl" or by similar designations. By way of example only, "C₁-C₄ alkyl" indicates an alkyl having one, two, three, or four carbon atoms, *i.e*., the alkyl is selected from among methyl, ethyl, propyl, iso-propyl, *n*-butyl, iso-butyl, *sec*-butyl and *t*-butyl. Thus, "C₁-C₄" includes C₁-C₂, C₁-C₃, C₂-C₃ and C₂-C₄ alkyl. Alkyls include, but are not limited to, methyl, ethyl, propyl, isopropyl, butyl, isobutyl, tertiary butyl, pentyl, and hexyl.

As used herein, "cycloalkyl" refers to a saturated mono- or multicyclic ring system where each of the atoms forming a ring is a carbon atom. Cycloalkyls can be formed by five, six, seven, eight, nine, ten, or more than ten carbon atoms. Examples of cycloalkyls include, but are not limited to, cyclopentane, cyclohexane, and cycloheptane.

The term "alkoxy" refers to an alkyl ether radical where the term alkyl is defined as above. Examples of alkoxy radicals include methoxy, ethoxy, n-propoxy, isopropoxy, n-butoxy, iso-butoxy, sec-butoxy, tert-butoxy and the like.

As used herein, the term "aryl" refers to a monocyclic, bicyclic or tricyclic aromatic system, including fused aryls, that contains no ring heteroatoms. The term aryl includes bicyclic radicals in which the two rings are aromatic and bicyclic radicals in which only one ring is aromatic. Examples of aryls include phenyl, naphthyl, anthracyl, indanyl, 1,2-dihydro-naphthyl, 1,4-dihydronaphthyl, indenyl, 1,4-naphthoquinonyl and 1,2,3,4-tetrahydronaphthyl. Aryl rings can be formed by six, seven, eight, nine, ten, or more than ten carbon atoms.

The term "aryloxy" refers to an aryl ether radical where the term aryl is defined as above. Examples of aryloxy radicals include phenoxy and benzyloxy.

As used herein, the terms "heterocycle" and "heterocyclic group" refer to a nonaromatic ring where one or more atoms forming the ring is a heteroatom. Exemplary heteroatoms include sulfur, oxygen, and nitrogen. Heterocycles can be formed by five, six, seven, eight, nine, ten, or more than ten atoms, in which one or more carbon atoms are replaced by one or more heteroatom.

The term "halogen" refers to fluorine, chlorine, bromine, or iodine.

The term "nitro group" refers to a group of formula -NO₂.

The term "amine" or "amino group" refers to a group of formula -NH₂, -NRH, or -NR₂, where R can be any alkyl, cycloalkyl, aryl, heteroaryl or heterocyclic group.

The term "hydroxyl" refers to a group of formula -OH.

The term "nitrile" or "nitrile group" refers to a group of formula -CN.

The term "amide" or "amide group" refers to a chemical moiety with the formula -(R)ₙ-C(O)NHR' or -(R)ₙ-NHC(O)R', where R and R' can be any alkyl, cycloalkyl, aryl, heteroaryl or heterocyclic group, and n is 0 or 1.

The term "pigmentary" as used herein refers to a phthalocyanine reaction product that has been treated or further processed after isolation from the reaction mixture in order to develop the requisite pigmentary properties, such as, *e.g*., particle size, such as between 100 µm to 0.01 µm or between 0.1 and 10 µm, particle size distribution, particle shape, crystal structure, agglomeration, polymorphic phase and tinctorial strength. Treatment or further processing of a phthalocyanine reaction product to obtain a pigmentary phthalocyanine product can include milling, grinding or purifying, or any combination thereof.

Throughout this disclosure, all parts and percentages are by weight (wt% or mass% based on the total weight) and all temperatures are in °C, unless otherwise indicated.

### B. PREPARATION OF PHTHALOCYANINES

Provided herein are methods for preparing aluminum phthalocyanines, such as chloroaluminum phthalocyanines. Of the three routes commonly used to produce phthalocyanine pigments, the methods provided herein utilize phthalonitrile as the starting material. The methods utilize ammonium salts to produce phthalocyanine pigments in high yield from a phthalonitrile. The methods include an ammonium salt that releases ammonia when heated. Examples of suitable ammonium salts include ammonium chloride, ammonium sulfate and ammonium acetate. Additionally, the methods provided herein eliminate the need to use a heavy metal catalyst, such as a molybdenum catalyst, which can be difficult to remove from the final pigment and can be harmful to the environment. In particular, the methods provided herein can be used to prepare phthalocyanine pigments for use in any application where such pigments are utilized, such as in dispersions, printing inks, paints, plastics, coatings, etc. Due to these features, the provided methods are advantageous over existing prior art methods of preparing phthalocyanines that utilize heavy metal catalysts or suffer from low yields in the absence of a heavy metal catalyst.

It has been surprisingly found that the presence and amount of an ammonium salt in the reaction mixture of the methods provided herein allows achievement of near-quantitative pigmentary phthalocyanine product yields without having to use a heavy metal catalyst. Not wishing to be bound by any one theory, it is believed that the ammonium salt slowly decomposes during heating to liberate ammonia, which then reacts with the phthalonitrile present in the reaction mixture to generate an intermediate that can react further, ultimately resulting in formation of the phthalocyanine macrocycle. As demonstrated in Example 1, the pigmentary phthalocyanine product yield in a comparative reaction in which no ammonium salt was present was much lower (*i.e*., 68.8%) than the yields achieved in reactions using an ammonium salt (Examples 4-6, in which yields range from 71.7% to 98.4%). Thus, provided herein are methods of synthesizing a pigmentary phthalocyanine product from a phthalonitrile in high yield in the presence of an ammonium salt.

In an exemplary application, the method includes preparing a pigmentary phthalocyanine product by first preparing a reaction mixture containing a phthalonitrile, an aluminum(III) chloride and an ammonium salt in a solvent and heating the reaction mixture to an elevated temperature to produce a crude phthalocyanine reaction product containing a phthalocyanine pigment. The crude phthalocyanine reaction product then can be purified and put through a pigmentation process to obtain a pigmentary phthalocyanine product. Any purification process known in the art can be used to purify the reaction product.

### 1. Reaction mixture

The methods provided herein include preparing a crude phthalocyanine reaction product from a reaction mixture containing a phthalonitrile, aluminum(III) chloride, an ammonium salt and one or more solvents. The methods provided herein do not include addition of a catalyst, such as a heavy metal catalyst, to the reaction mixture. Thus, the reaction mixture is free of any added heavy metal catalyst, or is substantially free of heavy metal catalysts. For example, the total amount of heavy metal in the reaction mixture is less than at or about 500 ppm. In some instances, the amount of heavy metal catalyst in the reaction mixture is less than at or about 400 ppm, less than at or about 300 ppm, less than at or about 200 ppm, or less than at or about 100 ppm. The pigmentary phthalocyanine product can be free of heavy metal impurities, for example, can contain 0 ppm heavy metal impurities.

### a. Phthalonitrile

The reaction mixtures of the methods provided herein contain any phthalonitrile that can be used to synthesize a phthalocyanine, such as any phthalocyanine with adjacent nitrile groups, for example, an unsubstituted phthalonitrile or a substituted phthalonitrile with adjacent nitrile groups. The phthalonitrile used in the methods provided herein can include, for example, an unsubstituted phthalonitrile, or a phthalonitrile substituted with up to four substituents in addition to the two pre-existing adjacent nitrile groups, for example a phthalonitrile with one substituent, two substituents, three substituents, or four substituents in addition to the two pre-existing adjacent nitrile groups.

The phthalonitriles used in the methods provided herein can include any unsubstituted or substituted phthalonitrile. In some applications, the phthalonitrile is unsubstituted, for example, phthalonitrile (*i.e*., 1,2-dicyanobenzene) that has the formula C₆H₄(CN)₂. In other applications, the phthalonitrile can be a substituted phthalonitrile with up to four substituents in addition to the two pre-existing adjacent nitrile groups. The substituents of the substituted phthalonitrile can be any one or a combination of C₁-C₃₀ alkyl, C₁-C₃₀ alkoxy, C₆-C₁₀ aryl, C₅-C₁₀ cycloalkyl, a C₅-C₁₀ heterocyclic group containing one to four heteroatoms selected from any of sulfur, oxygen and nitrogen or combination thereof, C₆-C₁₀ aryloxy, halogen, amide group, nitro group, amino group, hydroxyl, sulfur-containing group (*e.g*., sulfonic acid, sulfonate salt, sulfonate ester, sulfonamide), carboxyl group (*e.g*., carboxylic acid, carboxylate salt, carboxylate ester, carboxamide), phosphorous-containing group (*e.g*., phosphonic acid, phosphonate salt, phosphonate ester, phosphonamide), and any combination thereof. Exemplary substituents include one, two, three or four of any combination of C₁-C₃₀ alkyl, C₁-C₂₅ alkyl, C₁-C₂₀ alkyl, C₁-C₁₅ alkyl, C₁-C₁₀ alkyl, C₁-C₅ alkyl, C₁-C₃ alkyl, C₁-C₂ alkyl, C₂-C₃₀ alkyl, C₂-C₂₅ alkyl, C₂-C₂₀ alkyl, C₂-C₁₅ alkyl, C₂-C₁₀ alkyl, C₂-C₅ alkyl, C₂-C₃ alkyl, C₃-C₃₀ alkyl, C₃-C₂₅ alkyl, C₃-C₂₀ alkyl, C₃-C₁₅ alkyl, C₃-C₁₀ alkyl, C₃-C₅ alkyl, C₅-C₃₀ alkyl, C₅-C₂₅ alkyl, C₅-C₂₀ alkyl, C₅-C₁₅ alkyl, C₅-C₁₀ alkyl, C₁₀-C₃₀ alkyl, C₁₀-C₂₅ alkyl, C₁₀-C₂₀ alkyl, C₁₀-C₁₅ alkyl, C₁₅-C₃₀ alkyl, C₁₅-C₂₅ alkyl, C₁₅-C₂₀ alkyl, C₂₀-C₃₀ alkyl, C₂₀-C₂₅ alkyl, or C₂₅-C₃₀ alkyl; any C₁-C₃₀ alkoxy, C₁-C₂₅ alkoxy, C₁-C₂₀ alkoxy, C₁-C₁₅ alkoxy, C₁-C₁₀ alkoxy, C₁-C₅ alkoxy, C₁-C₃ alkoxy, C₁-C₂ alkoxy, C₂-C₃₀ alkoxy, C₂-C₂₅ alkoxy, C₂-C₂₀ alkoxy, C₂-C₁₅ alkoxy, C₂-C₁₀ alkoxy, C₂-C₅ alkoxy, C₂-C₃ alkoxy, C₃-C₃₀ alkoxy, C₃-C₂₅ alkoxy, C₃-C₂₀ alkoxy, C₃-C₁₅ alkoxy, C₃-C₁₀ alkoxy, C₃-C₅ alkoxy, C₅-C₃₀ alkoxy, C₅-C₂₅ alkoxy, C₅-C₂₀ alkoxy, C₅-C₁₅ alkoxy, C₅-C₁₀ alkoxy, C₁₀-C₃₀ alkoxy, C₁₀-C₂₅ alkoxy, C₁₀-C₂₀ alkoxy, C₁₀-C₁₅ alkoxy, C₁₅-C₃₀ alkoxy, C₁₅-C₂₅ alkoxy, C₁₅-C₂₀ alkoxy, C₂₀-C₃₀ alkoxy, C₂₀-C₂₅ alkoxy, or C₂₅-C₃₀ alkoxy; any C₆-C₁₀ aryl, C₆-C₉ aryl, C₆-C₈ aryl, C₆-C₇ aryl, C₇-C₁₀ aryl, C₇-C₉ aryl, C₇-C₈ aryl, C₈-C₁₀ aryl, C₈-C₉ aryl, or C₉-C₁₀ aryl; any C₅-C₁₀ cycloalkyl, C₅-C₉ cycloalkyl, C₅-C₈ cycloalkyl, C₅-C₇ cycloalkyl, C₅-C₆ cycloalkyl, C₆-C₁₀ cycloalkyl, C₆-C₉ cycloalkyl, C₆-C₈ cycloalkyl, C₆-C₇ cycloalkyl, C₇-C₁₀ cycloalkyl, C₇-C₉ cycloalkyl, C₇-C₈ cycloalkyl, C₈-C₁₀ cycloalkyl, C₈-C₉ cycloalkyl, or C₉-C₁₀ cycloalkyl; any C₅-C₁₀ heterocycle, C₅-C₉ heterocycle, C₅-C₈ heterocycle, C₅-C₇ heterocycle, C₅-C₆ heterocycle, C₆-C₁₀ heterocycle, C₆-C₉ heterocycle, C₆-C₈ heterocycle, C₆-C₇ heterocycle, C₇-C₁₀ heterocycle, C₇-C₉ heterocycle, C₇-C₈ heterocycle, C₈-C₁₀ heterocycle, C₈-C₉ heterocycle, or C₉-C₁₀ heterocycle, in which one or more carbon atoms are replaced by one or more sulfur, oxygen or nitrogen atoms in the ring or any combination thereof; and any C₆-C₁₀ aryloxy, C₆-C₉ aryloxy, C₆-C₈ aryloxy, C₆-C₇ aryloxy, C₇-C₁₀ aryloxy, C₇-C₉ aryloxy, C₇-C₈ aryloxy, C₈-C₁₀ aryloxy, C₈-C₉ aryloxy, or C₉-C₁₀ aryloxy.

Examples of suitable substituted phthalonitriles that can have up to four substituents in addition to the two pre-existing adjacent nitrile groups include, *e.g*., 3-methylphthalonitrile, phenyl phthalonitrile, chlorophthalonitrile, 2,3-naphthalene-dicarbonitrile, 4-sulfophthalonitrile, 4-(3-sulfopropylsulfonyl)-phthalonitrile, 4,5-bis(3-sulfopropylsulfonyl)phthalonitrile, and 4-(3-n-pentadecyl)phenoxy-phthalonitrile.

In the methods provided herein, the total amount of phthalonitrile in the reaction mixture as a percentage (%) by weight of the reaction mixture (wt%) can be, *e.g*., from at or about 1% to at or about 50%, such as 1% to 5%, 5% to 10%, 5% to 15%, 5% to 20%, 5% to 25%, 5% to 30%, 5% to 35%, 5% to 40%, 5% to 45%, 10% to 15%, 10% to 20%, 10% to 25%, 10% to 30%, 10% to 35%, 10% to 40%, 10% to 45%, 10% to 50%, 15% to 20%, 15% to 25%, 15% to 30%, 15% to 35%, 15% to 40%, 15% to 45%, 15% to 50%, 20% to 25%, 20% to 30%, 20% to 40%, 20% to 50%, 25% to 50%, or 30% to 50% by weight of the reaction mixture. Generally, the reaction mixtures contain less than 50 wt% phthalonitrile. For example, the reaction mixtures provided herein contain at least or about at least 1%, 2%, 3%, 4%, 5%, 6%, 7%, 8%, 9%, 10%, 11%, 12%, 13%, 14%, 15%, 16%, 17%, 18%, 19%, 20%, 21%, 22%, 23%, 24%, 25%, 26%, 27%, 28%, 29%, 30%, 31%, 32%, 33%, 34%, 35%, 36%, 37%, 38%, 39%, 40%, 41%, 42%, 43%, 44%, 45%, 46%, 47%, 48%, 49%, but less than 50% (wt%) total phthalonitrile.

### b. Metal halide

According to the present invention the reaction mixtures include aluminum(III) chloride as metal halide to synthesize a phthalocyanine.

In the reaction mixtures of the methods provided herein, the total amount of metal halide as a percentage (%) by weight of the reaction mixture (wt%) can be, *e.g.*, from at or about 0.1% to at or about 15%, such as 0.1% to 1%, 0.1% to 3%, 0.1% to 5%, 0.1% to 10%, 0.1% to 15%, 0.5% to 1%, 0.5% to 3%, 0.5% to 5%, 0.5% to 10%, 0.5% to 15%, 1% to 3%, 1% to 5%, 1% to 10%, 1% to 15%, 3% to 5%, 3% to 10%, 3%to 15%, 5% to 10%, 5% to 15%, 10% to 15% by weight of the reaction mixture. Generally, the reaction mixtures contain less than 15 wt% metal halide. For example, the reaction mixtures provided herein contain up to at or about 1%, 2%, 3%, 4%, 5%, 6%, 7%, 8%, 9%, 10%, 11%, 12%, 13%, 14% or 15% metal halide. Generally, the reaction mixtures provided herein contain less than 15% (wt%) total metal halide.

In the methods provided herein, the amount of metal halide in the reaction mixture can be based on the molar ratio of ammonium salt to metal halide. The molar ratio of ammonium salt to metal halide can range from 0.1:1 to 10:1. In some applications, the ratio of metal halide to ammonium salt is or is about 0.1:1, 0.2:1, 0.25:1, 0.3:1, 0.4:1, 0.45:1, 0.5:1, 0.6:1, 0.7:1, 0.75:1, 0.8:1, 0.9:1, 1:1, 1.2:1, 1.25:1, 1.3:1, 1.4:1, 1.5:1, 1.6:1, 1.7:1, 1.75:1, 1.8:1, 1.9:1, 2:1, 2.5:1, 3:1, 3.5:1, 3.6:1, 4:1, 4.5:1, 5:1, 5.5:1, 6:1, 6.5:1, 7:1, 7.5:1, 8:1, 8.5:1, 9:1, 9.5:1, or 10:1 or more.

### c. Ammonium salt

The reaction mixtures of the methods provided herein include an ammonium salt. The ammonium salts used in the methods provided herein are those with the general formula (NH₄)ₙX, where X is a counter-ion capable of forming a salt with the ammonium cation (NH₄⁺) and n can be 1 or 2; X is selected from a halide ion, a sulfur-containing ion, a nitrogen-containing ion, a carboxylic acid-containing ion, and a phosphorous-containing ion.

Such salts are known in the art and can be purchased from suppliers such as Sigma-Aldrich (St. Louis, MO), Fisher Scientific (Fair Lawn, NJ), and VWR International (Radnor, PA).

Suitable ammonium salts for use in the methods provided herein include ammonium salts containing a counter-ion that is capable of forming a salt with the ammonium cation. These counter-ions are selected from a halide ion, *e.g*., fluoride, chloride, bromide or iodide; a sulfur-containing ion, *e.g*., sulfate or sulfite; a nitrogen-containing ion, *e.g*., nitrate or nitrite; a carboxylic acid-containing ion, *e.g*., carbonate, carbamate, acetate, bicarbonate or mono- and dicarboxylic acids; a phosphorous-containing ion, *e.g*., phosphate, phosphate or phosphonate; and any substituted derivates thereof.

Examples of suitable ammonium salts include ammonium fluoride (NH₄F), ammonium chloride (NH₄Cl), ammonium bromide (NH₄Br), ammonium iodide (NH₄I), ammonium sulfate ((NH₄)₂SO₄), ammonium sulfite ((NH4)₂SO₃), ammonium nitrate (NH₄NO₃), ammonium nitrite (NH₄NO₂), ammonium carbonate ((NH₄)₂CO₃), ammonium carbamate (NH₄CO₂NH₂), ammonium acetate (NH₄CO₂CH₃), ammonium bicarbonate (NH₄HCO₃), ammonium salts of formic acid, acetic acid, propionic acid, butyric acid, benzoic acid, oxalic acid, and malonic acid, and any combination of these salts.

In the reaction mixtures of the methods provided herein, the total amount of ammonium salt, as a percentage (%) by weight of the reaction mixture (wt%) can be, *e.g*., from at or about 0.1% to at or about 15%, such as 0.1% to 0.5%, 0.1% to 0.75%, 0.1% to 1%, 0.1% to 3%, 0.1% to 5%, 0.1% to 10%, 0.1% to 15%, 0.5% to 0.75%, 0.5% to 1%, 0.5% to 3%, 0.5% to 5%, 0.5% to 10%, 0.5% to 15%, 1% to 3%, 1% to 5%, 1% to 10%, 1% to 15%, 3% to 5%, 3% to 10%, 3% to 15%, 5% to 10%, 5% to 15%, 10% to 15% by weight of the reaction mixture. Generally, the reaction mixtures contain less than 15 wt% ammonium salt. For example, the reaction mixtures provided herein can contain up to at or about 1%, 2%, 3%, 4%, 5%, 6%, 7%, 8%, 9%, 10%, 11%, 12%, 13%, 14% or 15% ammonium salt, based on the weight of the reaction mixture.

In the reaction mixtures of the methods provided herein, the amount of ammonium salt can be based on the molar ratio of the ammonium salt to the metal halide. The molar ratio of ammonium salt to metal halide can range from 0.1:1 to 10:1. In some applications, the ratio of ammonium salt to metal halide is or is about 0.1:1, 0.2:1, 0.25:1,0.3:1, 0.4:1, 0.45:1, 0.5:1, 0.6:1, 0.7:1, 0.75:1, 0.8:1, 0.9:1, 1:1, 1.2:1, 1.25:1, 1.3:1, 1.4:1, 1.5:1, 1.6:1, 1.7:1, 1.75:1, 1.8:1, 1.9:1, 2:1, 2.5:1, 3:1, 3.5:1, 3.6:1, 4:1, 4.5:1, 5:1, 5.5:1, 6:1, 6.5:1, 7:1, 7.5:1, 8:1, 8.5:1, 9:1, 9.5:1, or 10:1 or more.

### d. Solvent

The reaction mixtures of the methods provided herein generally include a solvent or combination of solvents. Suitable solvents include solvents that will ensure complete metallation of the phthalocyanine (*i.e*., the desired metal atom has formed one or more bonds to the phthalocyanine within the central cavity of the phthalocyanine molecule).

The solvent or combination of solvents have a boiling point of 150°C or higher. In some instances, a solvent with a boiling point greater than 200°C or greater than 250°C can be selected, or a combination of solvents, such as a combination of one solvent having a boiling point in the range of from 150°C to 200°C and a second solvent having a boiling point in the range of from 210°C to 280°C can be selected.

Suitable solvents used in the methods provided herein include solvents that are inert to the reaction and have a high boiling point of or higher than 150°C, such as substituted aromatic solvents, *e.g*., nitrobenzene; halogenated aromatic solvents, *e.g.*, α-chloronaphthalene, β-chloronaphthalene, o-dichlorobenzene, and dichlorotoluenes (isomer mix, *e.g*., a mixture of two or more isomers of dichlorotoluene, such as 2,3-dichlorotoluene, 2,4-dichlorotoluene, 2,5-dichlorotoluene, 2,6-dichlorotoluene, and any combination thereof); alkylated aromatic solvents, *e.g.*, α-methylnaphthalene, β-methylnaphthalene, and tetrahydronaphthalene (tetralin); diarylated aliphatic solvents, *e.g*., diphenylmethane and diphenylethane; alkoxylated aromatic solvents, *e.g.,* methoxy naphthalene; ether solvents, *e.g*., diphenyl ether and diethyleneglycol dimethylether; heterocyclic aromatic solvents, *e.g*., quinoline; aprotic polar solvents, *e.g*., sulfolane, dimethylsulfoxide, N-methyl formamide, and 1,3-dimethyl-2-imidazolinone; and any combination thereof.

In a preferred embodiment of the methods provided herein, the solvent can include an aromatic solvent, such as a halogenated aromatic solvent. An exemplary solvent used in the reaction mixtures of the methods provided herein is dichlorotoluenes (isomer mix).

In the reaction mixtures of the methods provided herein, the total amount of solvent as a percentage (%) by weight of the reaction mixture (wt%) can be, *e.g*., from at or about 60% to at or about 95%, such as 60% to 65%, 60% to 70%, 60% to 75%, 60% to 80%, 60% to 85%, 60% to 90%, 60% to 95%, 65% to 70%, 65% to 75%, 65% to 80%, 65% to 85%, 65% to 90%, 65% to 95%, 70% to 75%, 70% to 80%, 70% to 85%, 70% to 90%, 70% to 95%, 75% to 80%, 75% to 85%, 75% to 90%, 75% to 95%, 80% to 85%, 80% to 90%, 80% to 95%, 85% to 90%, 85% to 95% and 90% to 95%, by weight of the reaction mixture. Generally, the reaction mixtures contain less than 95 wt% solvent. For example, the reaction mixtures can contain at least or about at least 60%, 65%, 70%, 75%, 80%, 85%, 90%, but less than 95% (wt%) total solvent.

### e. Exemplary reaction mixtures

Provided herein are exemplary reaction mixtures that can be used in the methods provided herein to ultimately produce a pigmentary phthalocyanine product. The reaction mixtures of the methods provided herein include a phthalonitrile, a metal halide, an ammonium salt and a solvent. Exemplary of such reaction mixtures contain from at or about 1 wt% to at or about 50 wt% of a phthalonitrile, and in particular at least or about at least 1 wt% of a phthalonitrile; a metal halide, in an amount from at or about 0.1 wt% to at or about 15 wt% of a metal halide; an ammonium salt, in an amount from at or about 0.1 wt% to at or about 15 wt% of an ammonium salt; and from at or about 60% to at or about 95% of a solvent.

Exemplary reaction mixtures of the methods provided herein include a phthalonitrile, *e.g*., an unsubstituted phthalonitrile, such as 1,2-dicyanobenzene; aluminum(III) chloride; an ammonium salt, *e.g.*, ammonium chloride, ammonium sulfate, or ammonium acetate; and a solvent with a boiling point of or higher than 150°C, such as a halogenated aromatic solvent, *e.g.*, dichlorotoluenes (isomer mix). Exemplary of such reaction mixtures contain from at or about 1 wt% to at or about 50 wt% of a phthalonitrile, such as an unsubstituted phthalonitrile, *e.g*., 1,2-dicyano-benzene, and in particular at least or about at least 1 wt% of an unsubstituted phthalonitrile; aluminum(III) chloride, at an amount from at or about 0.1 wt% to at or about 15 wt%; an ammonium salt, *e.g*., ammonium chloride, ammonium sulfate, or ammonium acetate, at an amount from at or about 0.1 wt% to at or about 15 wt% of an ammonium salt; and from at or about 60 wt% to at or about 95 wt% of one or more solvents with a boiling point of or higher than 150°C, *e.g.*, dichlorotoluenes (isomer mix).

### 1) Ammonium chloride

In some applications, the ammonium salt can be ammonium chloride. For example, the exemplary reaction mixtures provided herein can contain from at or about 1 wt% to at or about 50 wt% of a phthalonitrile, *e.g*., 1,2-dicyanobenzene, and in particular at least or about at least or about 10 wt% of a phthalonitrile, *e.g*., 1,2-dicyanobenzene; 0.1 wt% to 15 wt% of a metal halide, for example aluminum(III) chloride, and in particular at least or about at least or about 1 wt% of a metal halide, for example aluminum(III) chloride; 0.1 wt% to 15 wt% of ammonium chloride, and in particular at least or about at least or about 0.5 wt% of ammonium chloride; and 60 wt% to 95 wt% of a solvent, *e.g*., dichlorotoluenes (isomer mix), and in particular at least or about at least or about 70 wt% of a solvent, *e.g*., dichlorotoluenes (isomer mix). Exemplary reaction mixtures provided herein can contain from at or about 10 wt% to at or about 25 wt% 1,2-dicyanobenzene; at or about 1 wt% to at or about 10 wt% aluminum(III) chloride; at or about 0.5 wt% to at or about 10 wt% ammonium chloride; and at or about 70 wt% to at or about 85 wt% dichlorotoluenes (isomer mix). For example, the reaction mixtures can contain at or about 15 wt% 1,2-dicyanobenzene, at or about 3.9 wt% aluminum(III) chloride, at or about 1.6 wt% ammonium chloride, and at or about 79.5 wt% dichlorotoluenes (isomer mix).

Reaction mixtures provided herein can contain a molar ratio of ammonium chloride to metal halide ranging from at or about 0.1:1 to at or about 10:1, and in particular a molar ratio of at or about 0.4:1 to at or about 5:1. For example, the reaction mixtures can contain a molar ratio of ammonium chloride to metal halide of at or about 1:1. Exemplary reaction mixtures provided herein can contain a molar ratio of ammonium chloride to metal halide, *e.g*., aluminum(III) chloride, ranging from at or about 0.1:1 to at or about 10:1, and in particular a molar ratio of at or about 0.4:1 to at or about 5:1. For example, the reaction mixtures can contain a molar ratio of ammonium chloride to aluminum(III) chloride of at or about 1:1.

### 2) Ammonium sulfate

In other applications the ammonium salt can be ammonium sulfate. For example, the exemplary reaction mixtures provided herein can contain 1 wt% to 50 wt% of a phthalonitrile, *e.g*., 1,2-dicyanobenzene, and in particular at least or about at least or about 10 wt% of a phthalonitrile, *e.g*., 1,2-dicyanobenzene; 0.1 wt% to 15 wt% of a metal halide, for example aluminum(III) chloride, and in particular at least or about at least or about 1 wt% of a metal halide, *e.g*., aluminum(III) chloride; 0.1 wt% to 15 wt% of ammonium sulfate, and in particular at least or about at least or about 0.5 wt% of ammonium sulfate; and 60 wt% to 95 wt% of a solvent, *e.g*., dichlorotoluenes (isomer mix), and in particular at least or about at least or about 70 wt% of a solvent, *e.g*., dichlorotoluenes (isomer mix). Exemplary reaction mixtures provided herein can contain from at or about 10 wt% to at or about 25 wt% 1,2-dicyanobenzene; at or about 1 wt% to at or about 10 wt% aluminum(III) chloride; at or about 0.5 wt% to at or about 10 wt% ammonium sulfate; and at or about 70 wt% to at or about 85 wt% dichlorotoluenes (isomer mix). For example, the reaction mixtures can contain at or about 14.7 wt% 1,2-dicyanobenzene, at or about 3.8 wt% aluminum(III) chloride, at or about 3.8 wt% ammonium sulfate, and at or about 77.7 wt% dichlorotoluenes (isomer mix).

Exemplary reaction mixtures provided herein can contain a molar ratio of ammonium sulfate to metal halide, *e.g*., aluminum(III) chloride, ranging from at or about 0.1:1 to at or about 10:1, and in particular a molar ratio of at or about 0.4:1 to at or about 5:1. For example, the reaction mixtures can contain a molar ratio of ammonium sulfate to aluminum(III) chloride of at or about 1:1.

### 3) Ammonium acetate

In some applications, the ammonium salt can be ammonium acetate. For example, the exemplary reaction mixtures provided herein can contain 1 wt% to 50 wt% of a phthalonitrile, *e.g*., 1,2-dicyanobenzene, and in particular at least or about at least or about 10 wt% of a phthalonitrile, *e.g*., 1,2-dicyanobenzene; 0.1 wt% to 15 wt% of a metal halide, for example aluminum(III) chloride, and in particular at least or about at least or about 1 wt% of a metal halide, *e.g*., aluminum(III) chloride; 0.1 wt% to 15 wt% of ammonium acetate, and in particular at least or about at least or about 0.5 wt% of ammonium acetate; and 60 wt% to 95 wt% of a solvent, *e.g*., dichlorotoluenes (isomer mix), and in particular at least or about at least or about 70 wt% of a solvent, *e.g*., dichlorotoluenes (isomer mix). Exemplary reaction mixtures provided herein can contain from at or about 10 wt% to at or about 25 wt% 1,2-dicyanobenzene; at or about 1 wt% to at or about 10 wt% aluminum(III) chloride; at or about 0.5 wt% to at or about 10 wt% ammonium acetate; and at or about 70 wt% to at or about 85 wt% dichlorotoluenes (isomer mix). For example, the reaction mixtures can contain at or about 14.9 wt% 1,2-dicyanobenzene, at or about 3.9 wt% aluminum(III) chloride, at or about 2.3 wt% ammonium acetate, and at or about 78.9 wt% dichlorotoluenes (isomer mix).

Exemplary reaction mixtures provided herein can contain a molar ratio of ammonium acetate to metal halide, *e.g*., aluminum(III) chloride, ranging from between or about between 0.1:1 to 10:1, and in particular a molar ratio of or about 0.4:1 to 5:1. For example, the reaction mixtures can contain a molar ratio of ammonium acetate to aluminum(III) chloride of or about 1:1.

### 4) Salt combinations

In some applications, the ammonium salt can be a combination of ammonium salts. For example, a combination of ammonium chloride and ammonium sulfate, or ammonium chloride and ammonium acetate, or ammonium sulfate and ammonium acetate, or ammonium chloride, ammonium sulfate and ammonium acetate can be used.

### 2. Exemplary methods

The methods provided herein include preparing a reaction mixture containing a phthalonitrile, a metal halide and an ammonium salt in a solvent; heating the reaction mixture to a temperature elevated from room temperature, *i.e*., at or about 20°C, to form a crude phthalocyanine reaction product; purifying the crude phthalocyanine reaction product to obtain a purified reaction product; subjecting the purified reaction product to a pigmentation process; and purifying the resulting milled phthalocyanine reaction product to obtain a pigmentary phthalocyanine product. In particular, the methods provided herein utilize the exemplary reaction mixtures described above. The methods to synthesize pigmentary phthalocyanine products provided herein result in higher yields than those obtained by known methods of synthesizing phthalocyanines, and are thus more efficient methods. The methods provided herein for synthesizing pigmentary phthalocyanine products result in high yield without the use of a heavy metal catalyst, such as molybdenum, thus resulting in pigmentary phthalocyanine products that do not contain heavy metal contamination. The methods provided herein also eliminate the need to use urea as the source of nitrogen in the reaction mixture, which can decompose and polymerize at the high temperatures required for the synthesis.

The following methods are exemplary only and provide a platform from which adjustments can be made. It is understood that changes can be made to the steps of the method while retaining some if not all of the desirable properties of the method. Further changes can be made by adding or altering steps or components of each step. For example, the order in which the steps are performed can be changed.

### a. Preparation of a crude phthalocyanine reaction product

In the methods provided herein, a reaction mixture containing a phthalocyanine, a metal halide, an ammonium salt, and a solvent is heated gradually from room temperature, *i.e*., at or about 20°C, to an elevated temperature, and maintained for a period of time until a crude phthalocyanine reaction product is formed. The elevated temperature can be any temperature in the range of from 50°C to about 400°C, generally between 100°C and 350°C or 150°C and 300°C. The elevated temperature can be, for example, the boiling point of the solvent in the reaction mixture. A typical heating schedule can be heating to a temperature of at or about 200°C over a period of time of from at or about 1 hour, or at or about 1.5 hours, or at or about 2 hours, with stirring, and once achieved, the elevated temperature, *e.g*., 200°C, is maintained for a total time of at least at or about 5 hours with stirring. Other heating temperatures and times and rates of heating can be used depending on the substrates, solvent and formation of the crude phthalocyanine reaction product. For example, the total time the elevated temperature is maintained can be at least at or about 5 hours, at least at or about 6 hours, at least at or about 7 hours, at least at or about 8 hours, at least at or about 9 hours, at least at or about 10 hours, at least at or about 10.5 hours, at least at or about 11 hours, at least at or about 12 hours, at least at or about 13 hours, at least at or about 14 hours, at least at or about 15 hours, at least at or about 16 hours, at least at or about 17 hours, at least at or about 18 hours, or longer, before cooling. After the elevated temperature has been maintained for the desired amount of time, the reaction mixture can be cooled to a temperature lower than the elevated temperature. For example, the reaction mixture can be cooled to room temperature, *i.e*., at or about 20°C, after heating at an elevated temperature for the desired amount of time. The reaction mixture can be heated to about 200°C over at least 1 hour for a total time of at least 10 hours before cooling, *e.g*., to room temperature (*i.e*., at or about 20°C), depending on the substrates, solvent and formation of the crude phthalocyanine reaction product, resulting in high yields of the crude phthalocyanine reaction product.

In the methods provided herein, the reaction mixture can be heated gradually from room temperature (*i.e*., at or about 20°C) to an elevated temperature of at least at or about 150°C, 155°C, 160°C, 165°C, 170°C, 175°C, 180°C, 185°C, 190°C, 195°C, 200°C, 205°C, 210°C, 215°C, 220°C, 225°C, 230°C, 235°C, 240°C, 245°C, 250°C, 255°C, 260°C, 265°C, 270°C, 275°C, 280°C, 285°C, 290°C, 295°C, 300°C, or higher, over a period of time of at least at or about 15 min., 20 min., 25 min., 30 min., 35 min., 40 min., 45 min., 50 min., 55 min., 60 min., 65 min., 70 min., 75 min., 80 min., 85 min., 90 min., 95 min., 100 min., 105 min., 110 min., 115 min., 120 min., 130 min., 140 min., 150 min., 160 min., 170 min., 180 min., or longer. For example, the reaction mixture can be heated from room temperature (*i.e*., at or about 20°C) to an elevated temperature at a rate of at least at or about 0.25°C/min., 0.5°C/min., 1°C/min., 1.5°C/min., 2°C/min., 2.5°C/min., 3°C/min., 3.5°C/min., 4°C/min., 4.5°C/min., 5°C/min., 6°C/min., 7°C/min., 8°C/min., 9°C/min., 10°C/min., or more, until the desired temperature is reached. In an exemplary method, the reaction mixture can be heated gradually with stirring to an elevated temperature of at least or about at least 200°C over a period of time of at least at or about 60 min., such as at a rate of temperature increase of about 3°C/min.

The rate of raising the temperature of the reaction mixture from its starting point, *e.g*., room temperature, to the targeted elevated temperature, *e.g*., 260°C, can be selected so that a single rate is used over the targeted period of time of heating (*e.g*., 120 minutes) or a plurality of rates can be used during the targeted heating period. For example, the reaction mixture can be heated from room temperature to 260°C over the heating period of 2 hours at a single rate of 2°C/min. (total temperature increase from starting temperature to elevated hold temperature is 240°C (260°C minus 20°C starting temperature) and 120 minutes at 2°C/min. yields a final temperature of 260°C). The same targeted elevated hold temperature also could be achieved in the same time period by varying the rates of heating during the targeted heating time period. A combination of two, three, or more rates of heating can be selected. The rates of heating can be varied in either direction (from faster heating to slower heating, or from slower heating to faster heating) and can be varied any number of times within the targeted heating time period.

For example, instead of using a single rate of 2°C/min. to heat the reaction mixture from room temperature to 260°C over a heating period of 2 hours, a combination of rates of heating of 1°C/min. for the first 60 minutes and a rate of 3°C/min. for the last 60 minutes would result in attaining the targeted elevated hold temperature in the desired heating period of 2 hours. Similarly, the same targeted elevated temperature can be reached in the same heating period of 2 hours by selecting a combination of rates of heating of 3°C/min. for the first 60 minutes and a rate of 1°C/min. for the last 60 minutes. Any combination of rates of heating can be used to achieve the targeted elevated temperature in the desired heating time period. For example, a targeted elevated temperature of 260°C over a heating period of 2 hours also can be achieved by selecting a rate of 3°C/min. for the first 30 minutes followed by a rate of 2°C/min. for 60 minutes followed by a rate of 1°C/min. for 30 minutes. A targeted elevated temperature of 260°C over a heating period of 2 hours also can be achieved by selecting a rate of 1°C/min. for the first 30 minutes followed by a rate of 4°C/min. for 30 minutes followed by a rate of 1.5°C/min. for 60 minutes. Thus, when the reaction mixture is heated to a targeted elevated temperature at a rate of from 0.5°C/minute to 5°C/minute, a single rate can be selected for the entire heating time period, or two or more heating rates can be selected for some fraction of the heating time period.

In the methods provided herein, the reaction mixture can be maintained at a temperature elevated from room temperature for at least at or about 2 hours, 3 hours, 4 hours, 5 hours, 6 hours, 7 hours, 8 hours, 9 hours, 10 hours, 10.5 hours, 11 hours, 12 hours, 13 hours, 14 hours, 15 hours, 16 hours, 17 hours, 18 hours, 19 hours, 20 hours, or longer before cooling. In an exemplary method, the reaction mixture can be maintained at an elevated temperature for at least at or about 10 hours before cooling, *e.g*., to room temperature, *i.e*., at or about 20°C.

The reaction mixture of the methods provided herein can be heated to an elevated temperature under an inert gas atmosphere, such as a nitrogen gas or argon gas atmosphere, or under air. The reaction mixture of the methods provided herein can be heated to an elevated temperature at atmospheric pressure or at an elevated pressure, *i.e*., a pressure higher than atmospheric pressure. The elevated pressure can be achieved, *e.g*., by performing the reaction in a closed vessel or in a vented vessel.

After heating the reaction mixture at an elevated temperature for the desired amount of time, the crude phthalocyanine reaction product of the methods provided herein can be isolated from the reaction mixture by removing the solvent from the reaction mixture. Any method of removing a solvent from a reaction mixture known to those of skill in the art can be used, including, for example, vacuum distillation, rotary evaporation, and filtration.

Exemplary of the methods provided herein is a method of synthesizing a crude phthalocyanine reaction product by heating a reaction mixture containing a phthalonitrile, *e.g.*, 1,2-dicyanobenzene, aluminum(III) chloride, an ammonium salt, *e.g.,* ammonium chloride, and a solvent, *e.g.*, dichlorotoluenes (isomer mix) gradually to a temperature of at least at or about 200°C over a period of at least at or about 60 min., and maintaining the elevated temperature for a period of at least at or about 10.5 hours.

In some applications the ammonium salt can be ammonium sulfate. For example, provided herein is a method of synthesizing a crude phthalocyanine reaction product by heating a reaction mixture containing a phthalonitrile, *e.g*., 1,2-dicyanobenzene, aluminum(III) chloride, ammonium sulfate, and a solvent, *e.g*., dichlorotoluenes (isomer mix), gradually to a temperature of at least or about at least 200°C over a period of at least or about at least 120 min., and maintaining the elevated temperature for a period of at least or about at least 10 hours.

In other applications the ammonium salt can be ammonium acetate. For example, provided herein is a method of synthesizing a crude phthalocyanine reaction product by heating a reaction mixture containing a phthalonitrile, *e.g*., 1,2-dicyanobenzene, aluminum(III) chloride, ammonium acetate, and a solvent, *e.g*., dichlorotoluenes (isomer mix) gradually to a temperature of at least or about at least 200°C over a period of at least or about at least 60 min., and maintaining the elevated temperature for a period of at least or about at least 11 hours.

### b. Purification of the crude phthalocyanine reaction product to obtain a purified reaction product

In the methods provided herein, the crude phthalocyanine reaction product can be purified by a purification process. The purification process can be performed to remove impurities, such as impurities from the reaction mixture, *e.g*., unreacted starting materials. For example, the crude phthalocyanine reaction product can be purified by performing one or more aqueous wash steps. The aqueous wash can be performed using water, such as distilled or deionized water, aqueous acid, or both. The purification process, *e.g*., an aqueous wash, can be performed one time, two times, three times, four times, or more, depending on the desired purity level of the reaction product and the amount of impurities present. For example, the purification process can be performed one or more times on the crude phthalocyanine reaction product. In an exemplary method, the purification process can be performed two or more times on the crude phthalocyanine reaction product.

In the methods provided herein, the purification process can be performed at or about at 20°C, 30°C, 40°C, 50°C, 60°C, 70°C, 80°C, 90°C, 100°C, 110°C, 120°C, 130°C, 140°C, or 150°C, or at any temperature between 20°C and 150°C. In the methods provided herein, the purification process can be performed for a period of time of from at least or about at 0.5 hours, 1 hour, 2 hours, 3 hours, 4 hours, 5 hours, 6 hours, 7 hours, 8 hours, 9 hours, 10 hours, or longer. The purification process, *e.g*., an aqueous wash, can be performed by slurrying the crude phthalocyanine reaction product in the aqueous wash at or about at 20°C, 30°C, 40°C, 50°C, 60°C, 70°C, 80°C, 90°C, 100°C, 110°C, 120°C, 130°C, 140°C, or 150°C, or at any temperature between 20°C and 150°C, for a period of time of from at least or about at 0.5 hours, 1 hour, 2 hours, 3 hours, 4 hours, 5 hours, 6 hours, 7 hours, 8 hours, 9 hours, 10 hours, or longer. The aqueous wash can be performed with constant mixing. In an exemplary method, the purification process includes an aqueous acid wash, and is performed at or about at 90°C for at least at or about 1 hour, or for at least at or about 2 hours.

The aqueous acid wash can be performed using an aqueous solution of acid, such as a mineral acid or an organic acid or a combination thereof. For example, the aqueous acid solution can be an aqueous solution of sulfuric acid (H₂SO₄) or hydrochloric acid (HCl). Suitable aqueous acid solutions of the aqueous acid wash include solutions that contain, *e.g*., 0.1% to 10% acid, such as at least or about 0.1%, 0.2%, 0.3%, 0.4%, 0.5%, 0.6%, 0.7%, 0.8%, 0.9%, 1%, 1.1%, 1.2%, 1.3%, 1.4%, 1.5%, 1.6%, 1.7%, 1.8%, 1.9%, 2%, 2.5%, 3%, 3.5%, 4%, 4.5%, 5%, 6%, 7%, 8%, 9%, 10% or more acid. For example, the aqueous acid solution can be an aqueous solution containing at or about 1% sulfuric acid. The aqueous acid solution can be an aqueous solution containing at or about 1% hydrochloric acid or less, such as an aqueous solution of 0.3% hydrochloric acid. In the methods provided herein, the purification process comprising an aqueous acid wash can be performed more than one time, *e.g*., two times, and can be performed one time using an aqueous acid solution of sulfuric acid, such as a 1% solution of sulfuric acid, and one time using an aqueous acid solution of hydrochloric acid, such as a 0.3% solution of hydrochloric acid, in any order.

Suitable aqueous acid solutions of the methods provided herein include solutions that are, *e.g*., 0.005M to 1M acid solutions, such as at least or about 0.005M, 0.01M, 0.02M, 0.03M, 0.04M, 0.05M, 0.06M, 0.07M, 0.08M, 0.09M, 0.1M, 0.2M, 0.3M, 0.4M, 0.5M, 0.6M, 0.7M, 0.8M, 0.9M, 1M or any concentration from 0.005M to 1M.

Exemplary of the methods provided herein is a method of purifying a crude phthalocyanine reaction product to obtain a purified reaction product by performing a purification process, such as an aqueous wash or aqueous acid wash, *e.g*., washing the crude phthalocyanine reaction product with a 1% aqueous solution of sulfuric acid, or both, at a temperature of or about 90°C for at least or about at least 2 hours.

### c. Pigmentation process to obtain a milled phthalocyanine reaction product

In the methods provided herein, the crude phthalocyanine reaction product obtained after heating the reaction mixture at an elevated temperature for a period of time, or the purified reaction product obtained after a purification process, can be further processed. For example, the crude phthalocyanine reaction product or the purified reaction product can be subjected to a pigmentation process to obtain a milled phthalocyanine reaction product. The pigmentation process can be used to break up the crude or purified reaction product into smaller particles. A typical pigmentation process can include grinding (*i.e*., milling) the crude or purified reaction product, *e.g*., grinding the crude or purified reaction product in a mixer or kneader in the presence of a pigment milling aid and a wetting agent that does not substantially dissolve the milling aid. For example, the milling aid can be an inorganic salt and the wetting agent can be an alkylene glycol. Suitable inorganic salts that can be used as the milling aid include, but are not limited to, sodium chloride (NaCl), sodium sulfate (Na₂SO₄), calcium chloride (CaCl₂), and other inorganic salts known to those of skill in the art. Suitable alkylene glycols that can be used as the wetting agent include, but are not limited to, ethylene glycol, diethylene glycol, triethylene glycol, tetraethylene glycol, propylene glycol, dipropylene glycol, tripropylene glycol, tetrapropylene glycol and polyethylene glycol. In one embodiment, the milling aid is NaCl and the wetting agent is diethylene glycol.

The grinding can be done at any temperature of from at or about room temperature, *i.e*., at or about 20°C, to at or about the boiling point of the wetting agent. For example, the grinding temperature in the pigmentation process can be at or about 20°C, 30°C, 40°C, 50°C, 60°C, 70°C, 80°C, 90°C, 100°C, 110°C, 120°C, 130°C, 140°C, or 150°C, or any temperature between 20°C and 150°C.

In the pigmentation process, the grinding can be done for a period of time of from at or about 2 hours to at or about 12 hours, or longer if required. For example, the grinding time of the pigmentation process can be at least or at about 1 hour, 2 hours, 3 hours, 4 hours, 5 hours, 6 hours, 7 hours, 8 hours, 9 hours, 10 hours, 11 hours, 12 hours or longer. The grinding temperatures and times can be varied depending on the crude or purified reaction product, the selected milling agent and the wetting agent. In an exemplary pigmentation process, the grinding can be performed at a temperature of at or about at 80°C for at least or about at least 6 hours using sodium chloride and diethylene glycol.

### d. Purification of the milled phthalocyanine reaction product to obtain a pigmentary phthalocyanine product

In the methods provided herein, a purification of the milled phthalocyanine reaction product can be performed. The purification process can be performed to remove impurities, such as impurities from the pigmentation process, *e.g*., the milling agent and the wetting agent. For example, the milled phthalocyanine reaction product can be purified by performing one or more aqueous wash steps. The aqueous wash can be performed using water, such as distilled or deionized water, aqueous acid, or both. The purification process, *e.g*., an aqueous wash, can be performed one time, two times, three times, four times, or more, depending on the desired purity level of the phthalocyanine pigment and the amount of impurities present. For example, the purification process, *e.g*., an aqueous wash, can be performed one or more times on the milled phthalocyanine reaction product, *e.g*., after the pigmentation process is complete. In an exemplary method, the purification process can be performed two or more times on the milled phthalocyanine reaction product after the pigmentation process is complete.

In the methods provided herein, the purification process can be performed at or about at 20°C, 30°C, 40°C, 50°C, 60°C, 70°C, 80°C, 90°C, 100°C, 110°C, 120°C, 130°C, 140°C, or 150°C, or at any temperature between 20°C and 150°C. In the methods provided herein, the purification process can be performed for a period of time of from at least or about at 0.5 hours, 1 hour, 2 hours, 3 hours, 4 hours, 5 hours, 6 hours, 7 hours, 8 hours, 9 hours, 10 hours, or longer. The purification process, *e.g*., an aqueous wash, can be performed by slurrying the milled phthalocyanine reaction product at or about at 20°C, 30°C, 40°C, 50°C, 60°C, 70°C, 80°C, 90°C, 100°C, 110°C, 120°C, 130°C, 140°C, or 150°C, or at any temperature between 20°C and 150°C, for a period of time of from at least or about at 0.5 hours, 1 hour, 2 hours, 3 hours, 4 hours, 5 hours, 6 hours, 7 hours, 8 hours, 9 hours, 10 hours, or longer. In an exemplary method, the purification process includes an aqueous acid wash, and is performed at or about at 90°C for at least at or about 1 hour, or for at least at or about 2 hours.

The aqueous acid wash can be performed using an aqueous solution of acid, such as a mineral acid or an organic acid or combination thereof. For example, the aqueous acid solution can be an aqueous solution of sulfuric acid (H₂SO₄) or hydrochloric acid (HCl). Suitable aqueous acid solutions of the aqueous acid wash include solutions that contain, *e.g*., 0.1% to 10% acid, such as at least or about 0.1%, 0.2%, 0.3%, 0.4%, 0.5%, 0.6%, 0.7%, 0.8%, 0.9%, 1%, 1.1%, 1.2%, 1.3%, 1.4%, 1.5%, 1.6%, 1.7%, 1.8%, 1.9%, 2%, 2.5%, 3%, 3.5%, 4%, 4.5%, 5%, 6%, 7%, 8%, 9%, 10% or more acid. For example, the aqueous acid solution can be an aqueous solution of at or about 1% sulfuric acid. The aqueous acid solution can be an aqueous solution of at or about 1% hydrochloric acid or less, such as an aqueous solution of 0.3% hydrochloric acid. In the methods provided herein, the purification process, *e.g*., an aqueous acid wash, can be performed more than one time, *e.g*., two times, and can be performed one time using an aqueous acid solution of sulfuric acid, such as a 1% solution of sulfuric acid, and one time using an aqueous acid solution of hydrochloric acid, such as a 0.3% solution of hydrochloric acid.

Suitable aqueous acid solutions of the methods provided herein include solutions that are, *e.g*., 0.005M to 1M acid solutions, such as at least or about 0.005M, 0.01M, 0.02M, 0.03M, 0.04M, 0.05M, 0.06M, 0.07M, 0.08M, 0.09M, 0.1M, 0.2M, 0.3M, 0.4M, 0.5M, 0.6M, 0.7M, 0.8M, 0.9M, 1M or any concentration in between 0.005M to 1M.

Exemplary of the methods provided herein is a method of purifying a milled phthalocyanine reaction product by performing a purification process, such as an aqueous acid wash, *e.g*., using a 0.3% aqueous solution of hydrochloric acid, on the milled phthalocyanine reaction product, for example, after performing the pigmentation process, at a temperature of or about 90°C for at least or about at least 1 hour.

The purification process of the methods provided herein, *e.g*., an aqueous wash, can be performed one or more times on the crude phthalocyanine reaction product, *e.g*., before the pigmentation process is performed, or can be performed one or more times after the pigmentation process is complete, or both. In an exemplary method, the purification process can be performed two or more times on the crude phthalocyanine reaction product before the pigmentation process, and two or more times on milled phthalocyanine reaction product after the pigmentation process is complete.

Exemplary of the methods provided herein is a method of purifying a crude phthalocyanine reaction product by performing a purification process, such as an aqueous wash or aqueous acid wash, *e.g*., using a 1% aqueous solution of sulfuric acid, or both on the crude phthalocyanine reaction product, for example, before performing the pigmentation process, at a temperature of or about 90°C for at least or about at least 2 hours, and performing a second purification process, such as an aqueous acid wash, *e.g*., using a 0.3% aqueous solution of hydrochloric acid, on the milled phthalocyanine reaction product, for example, after performing the pigmentation process, at a temperature of or about 90°C for at least or about at least 1 hour.

The methods provided herein yield a phthalocyanine pigment that can be used in any application where phthalocyanine pigments are utilized, such as in dispersions, printing inks, paints, plastics, and coatings. For example, the methods provided herein synthesize a pigmentary phthalocyanine product, such as a metal phthalocyanine pigment, *e.g*., chloroaluminum phthalocyanine, that can be used in applications such as in dispersions, printing inks, paints, plastics, coatings, and any other application in which a phthalocyanine pigment can be used.

### C. EXAMPLES

The following examples, including experiments and results achieved, are provided for illustrative purposes only and are not to be construed as limiting the claimed subject matter.

### Example 1

### (Comparative method - no ammonium salt)

A chloroaluminum phthalocyanine pigment (Pigment 1) was prepared by adding 614.4 g phthalonitrile, 160.0 g anhydrous aluminum(III) chloride and 3248 g dichlorotoluenes (isomer mixture) to a 4 L glass kettle. The reaction mixture was stirred as the temperature was raised to 200°C over a period of two hours and maintained for an additional 13 hours at 200°C before cooling to room temperature. After cooling, the solvent was removed by vacuum distillation to obtain a crude phthalocyanine reaction product. The crude phthalocyanine reaction product was purified by preparing a slurry in 2.5 L of 1% aqueous sulfuric acid and heating to 90°C for two hours with stirring, followed by filtration at 90°C, washing with water until the filtrate was neutralized, and drying at 80°C to obtain 582.35 g (84.5%) of a purified reaction product.

43.00 g of the purified reaction product, 173.0 g of sodium chloride, and 40.00 g of diethylene glycol were combined in a kneader and blended (milled) for 6 hours at 80°C. The milled phthalocyanine reaction product was slurried in 2.5 L of water containing 25 g 30% hydrochloric acid for one hour at 90°C with stirring, followed by filtration at 90°C, washing with water until the filtrate was neutralized, and drying at 80°C to obtain 35.01 g (81.4%) of purified Pigment 1. The overall yield for the synthesis of a purified chloroaluminum phthalocyanine pigment (Pigment 1) was 68.8%.

### Example 2

### (Comparative method - no ammonium salt)

A chloroaluminum phthalocyanine pigment (Pigment 2) was prepared by adding 153.6 g phthalonitrile, 40.00 g anhydrous aluminum(III) chloride, 32.00 g urea, 1.20 g ammonium dimolybdate and 812.0 g dichlorotoluenes (isomer mixture) to a 1 L glass kettle. The reaction mixture was stirred as the temperature was raised to 200°C over a period of three hours and maintained for a total of nine hours at 200°C before cooling to room temperature. After cooling, the solvent was removed by vacuum distillation to obtain a crude phthalocyanine reaction product. The crude phthalocyanine reaction product was purified by preparing a slurry in 1% aqueous sulfuric acid and heating to 90°C for two hours with stirring, followed by filtration at 90°C, washing with water until the filtrate was neutralized, and drying at 80°C to obtain a 99.26% yield of a purified reaction product.

43.00 g of the purified reaction product, 173.0 g of sodium chloride, and 40.00 g of diethylene glycol were combined in a kneader and blended (milled) for 6 hours at 80°C. The milled phthalocyanine reaction product was slurried in 2.5 L of water containing 25 g 30% hydrochloric acid for one hour at 90°C with stirring, followed by filtration at 90°C, washing with water until the filtrate was neutralized, and drying at 80°C to obtain 40.94 g (95.2%) of purified Pigment 2. The overall yield for synthesis of a purified chloroaluminum phthalocyanine pigment (Pigment 2) was 94.5%.

Synthesis of a chloroaluminum phthalocyanine pigment using a heavy metal (*i.e*., molybdenum) led to a relatively high yield of 94.5% of the pigmentary phthalocyanine product. However, it is generally not possible to remove all traces of the heavy metal catalyst from the final pigment, with trace levels to low percentage levels of heavy metal remaining in the purified pigment.

### Example 3

### (Comparative method - no ammonium salt)

A chloroaluminum phthalocyanine pigment (Pigment 3) was prepared by adding 76.8 g phthalonitrile, 20.00 g anhydrous aluminum(III) chloride and 406.0 g dichlorotoluenes (isomer mixture) to a 1 L glass kettle. The reaction mixture was stirred as ammonia gas was bubbled beneath the reaction surface as the temperature was raised to 200°C over a period of 1.25 hours. Ammonia gas was continuously bubbled into the reaction mixture over the next two hours while the temperature was maintained at 200°C. After the bubbling of ammonia gas was discontinued, the reaction mixture was maintained at 200°C for an additional 7.5 hours (10.75 hours at 200°C total) before cooling to room temperature. After cooling, the solvent was removed by vacuum distillation to obtain a crude phthalocyanine reaction product. The crude phthalocyanine reaction product was purified by preparing a slurry in 2.5 L of 1% aqueous sulfuric acid and heating to 90°C for two hours with stirring, followed by filtration at 90°C, washing with water until the filtrate was neutralized, and drying at 80°C to obtain 73.57 g (85.37%) of a purified reaction product.

43.00 g of the purified reaction product, 173.0 g of sodium chloride, and 40.00 g of diethylene glycol were combined in a kneader and blended (milled) for 6 hours at 80°C. The milled phthalocyanine reaction product was slurried in 2.5 L of water containing 25 g 30% hydrochloric acid for one hour at 90°C with stirring, followed by filtration at 90°C, washing with water until the filtrate was neutralized, and drying at 80°C to obtain 40.36 g (93.8%) of purified Pigment 3. The overall yield for synthesis of a purified chloroaluminum phthalocyanine pigment (Pigment 3) using ammonia gas as the source of ammonia was 80.1%.

### Example 4

### Synthesis of chloroaluminum phthalocyanine pigments using ammonium chloride without the use of a heavy metal catalyst

Several chloroaluminum phthalocyanine pigments were synthesized using varying molar ratios of ammonium chloride (NH₄Cl) and aluminum(III) chloride (AlCl₃) without using a heavy metal catalyst. Pigments 4A-4E were synthesized using 0.45:1, 0.9:1, 1:1, 1.8:1 and 3.6:1 molar equivalents of ammonium chloride to aluminum(III) chloride, respectively, according to the following general procedure.

Phthalonitrile, anhydrous aluminum(III) chloride, ammonium chloride and dichlorotoluenes (isomer mixture) were added to a 1 L glass kettle. The reaction mixture was stirred as the temperature was raised to 200°C over a period of 1-1.5 hours and maintained for a total of 10.5 to 17 hours at 200°C before cooling to room temperature. After cooling, the solvent was removed by vacuum distillation to obtain a crude phthalocyanine reaction product. The crude phthalocyanine reaction product was purified by preparing a slurry in 2.5 L of 1% aqueous sulfuric acid and heating to 90°C for two hours with stirring, followed by filtration at 90°C, washing with water until the filtrate was neutralized, and drying at 80°C to obtain a purified reaction product.

The purified reaction product (43.00 g), sodium chloride (173.00 g) and diethylene glycol (40.00 g) were combined in a kneader and blended (milled) for 6 hours at 80°C. The milled phthalocyanine reaction product was slurried in 2.5 L of water containing 25 g 30% hydrochloric acid for one hour at 90°C with stirring, followed by filtration at 90°C, washing with water until the filtrate was neutralized, and drying at 80°C to obtain a purified chloroaluminum phthalocyanine pigment.

Table 1 below details the formulations of Pigments 4A-4E made according to the above procedure.

**Table 1. Chloroaluminum phthalocyanine pigments using NH₄Cl and AlCl₃**

| | **Pigment 4A** | **Pigment 4B** | **Pigment 4C** | **Pigment 4D** | **Pigment 4E** |
|---|---|---|---|---|---|
| **NH₄Cl:AlCl₃** | 0.45:1 | 0.9:1 | 1:1 | 1.8:1 | 3.6:1 |
| **NH₄Cl (g)** | 3.62 g | 7.23 g | 8.03 g | 14.45 g | 28.89 g |
| **NH₄Cl (mol)** | 0.068 mol | 0.135 mol | 0.15 mol | 0.27 mol | 0.54 mol |
| **AlCl₃ (g)** | 20.00 g | 20.00 g | 20.00 g | 20.00 g | 20.00 g |
| **AlCl₃ (mol)** | 0.15 mol | 0.15 mol | 0.15 mol | 0.15 mol | 0.15 mol |
| **Phthalonitrile (g)** | 76.80 g | 76.80 g | 76.80 g | 76.80 g | 76.80 g |
| **Phthalonitrile (mol)** | 0.60 mol | 0.60 mol | 0.60 mol | 0.60 mol | 0.60 mol |
| **Dichlorotoluenes (g)** | 406.0 g | 406.0 g | 406.0 g | 406.0 g | 406.0 g |
| **Dichlorotoluenes (g)** | 2.52 mol | 2.52 mol | 2.52 mol | 2.52 mol | 2.52 mol |
| **Total time at 200°C** | 11 h | 11 h | 10.5 h | 11 h | 17 h |
| **Crude product (% yield)** | 92.9% | 95.1% | 104% | 99.6% | 100.5% |
| **Purified pigment (% yield)** | 91.8% | 93.4% | 94.6% | 94.6% | 93.5% |
| **Overall total yield (%)** | 85.3% | 88.8% | 98.4% | 94.2% | 94.0% |

The synthesis of chloroaluminum phthalocyanine pigments using varying molar ratios of ammonium chloride to aluminum(III) chloride without using a heavy metal catalyst led to high yields of purified pigment (>85%).

### Example 5

### Synthesis of chloroaluminum phthalocyanine pigments using ammonium sulfate without the use of a heavy metal catalyst

A chloroaluminum phthalocyanine pigment (Pigment 5) was synthesized using equal molar ratios of ammonium sulfate ((NH₄)₂SO₄) and aluminum(III) chloride (AlCl₃), without using a heavy metal catalyst, according to the following procedure.

76.80 g phthalonitrile, 20.00 g anhydrous aluminum(III) chloride, 19.80 g ammonium sulfate and 406.0 g dichlorotoluenes (isomer mixture) were added to a 1 L glass kettle. The reaction mixture was stirred as the temperature was raised to 200°C over a period of two hours and maintained for a total of 10 hours at 200°C before cooling to room temperature. After cooling, the solvent was removed by vacuum distillation to obtain a crude phthalocyanine reaction product. The crude phthalocyanine reaction product was purified by preparing a slurry in 2.5 L of 1% aqueous sulfuric acid and heating to 90°C for two hours with stirring, followed by filtration at 90°C, washing with water until the filtrate was neutralized, and drying at 80°C to obtain 89.11 g (103%) of a purified reaction product.

43.00 g of the purified reaction product, 173.0 g of sodium chloride, and 40.00 g of diethylene glycol were combined in a kneader and blended (milled) for 6 hours at 80°C. The milled phthalocyanine reaction product was slurried in 2.5 L of water containing 25 g 30% hydrochloric acid for one hour at 90°C with stirring, followed by filtration at 90°C, washing with water until the filtrate was neutralized, and drying at 80°C to obtain 40.35 g (93.8%) of purified Pigment 5. The overall yield for the synthesis of a purified chloroaluminum phthalocyanine pigment (Pigment 5) was 96.6%.

Under these conditions, very high yields of chloroaluminum phthalocyanine pigments were obtained using equimolar amounts of an ammonium salt and aluminum(III) chloride without the use of a heavy metal catalyst. The yield obtained using ammonium sulfate (96.6%) is comparable to the high yields obtained using ammonium chloride (98.4%).

### Example 6

### Synthesis of chloroaluminum phthalocyanine pigments using ammonium acetate without the use of a heavy metal catalyst

A chloroaluminum phthalocyanine pigment (Pigment 6) was synthesized using equal molar ratios of an ammonium salt, ammonium acetate (CH₃COONH₄), and aluminum(III) chloride (AlCl₃), without using a heavy metal catalyst, according to the following procedure.

76.80 g phthalonitrile, 20.00 g anhydrous aluminum(III) chloride, 11.79 g ammonium acetate and 406.0 g dichlorotoluenes (isomer mixture) were added to a 1 L glass kettle. The reaction mixture was stirred as the temperature was raised to 200°C over a period of one hour and maintained for a total of 11 hours at 200°C before cooling to room temperature. After cooling, the solvent was removed by vacuum distillation to obtain a crude phthalocyanine reaction product. The crude phthalocyanine reaction product was purified by preparing a slurry in 2.5 L of 1% aqueous sulfuric acid and heating to 90°C for two hours with stirring, followed by filtration at 90°C, washing with water until the filtrate was neutralized, and drying at 80°C to obtain 64.21 g (74.5%) of a purified reaction product.

43.00 g of the purified reaction product, 173.0 g of sodium chloride, and 40.00 g of diethylene glycol were combined in a kneader and blended (milled) for 6 hours at 80°C. The milled phthalocyanine reaction product was slurried in 2.5 L of water containing 25 g 30% hydrochloric acid for one hour at 90°C with stirring, followed by filtration at 90°C, washing with water until the filtrate was neutralized, and drying at 80°C to obtain 41.42 g (96.3%) of purified Pigment 10. The overall yield for the synthesis of a purified chloroaluminum phthalocyanine pigment (Pigment 6) using equimolar amounts of ammonium acetate and aluminum(III) chloride, without the use of a heavy metal catalyst, was 71.7%.

Since modifications will be apparent to those of skill in this art, it is intended that this invention be limited only by the scope of the appended claims.

## Claims

1. A method for preparing a crude phthalocyanine, comprising:
providing a reaction mixture containing a phthalonitrile, a metal halide, an ammonium salt of the formula (NH₄)ₙX, and a solvent, wherein:
X is selected from a halide ion, a sulfur-containing ion, a nitrogen-containing ion, a carboxylic acid-containing ion, and a phosphorous-containing ion;
n is 1 or 2: and
the reaction mixture does not include an added heavy metal catalyst; and
heating the reaction mixture to an elevated temperature greater than room temperature to produce a crude phthalocyanine reaction product;
wherein the metal halide comprises aluminum(III) chloride;
wherein the solvent comprises one or more solvents having a boiling point of 150°C or higher.

2. The method of claim 1, wherein the phthalonitrile is substituted with up to four substituents in addition to the two pre-existing adjacent nitrile groups.

3. The method of any one of claims 1 to 2, wherein the molar ratio of ammonium salt to metal halide is from 0.1 : 1 to 10 : 1.

4. The method of any one of claims 1 to 3, wherein the heating step is performed by heating the reaction mixture to a temperature elevated at least 10°C above room temperature over a period of at least 1 hour.

5. The method of any one of claims 1 to 4. wherein the reaction mixture is heated to a temperature elevated at least 10°C above room temperature at a rate of from 0.5°C/minute to 5°C/minute.

6. The method of any one of claims 1 to 5, further comprising: grinding the crude phthalocyanine reaction product in the presence of a milling aid and a wetting agent to obtain a milled phthalocyanine reaction product; and purifying the milled phthalocyanine reaction product to obtain a pigmentary phthalocyanine product.

7. The method of claim 6, further comprising purifying the crude phthalocyanine reaction product prior to grinding.

8. The method of any one of claims 1 to 7, wherein the crude phthalocyanine reaction product is substantially free of heavy metal.

9. The method of any one of claims 6 to 8, wherein the grinding is performed for a period of time from 1 hour to 8 hours.

10. The method of any one of claims 6 to 9, wherein the purifying step comprises washing with an aqueous solution.

11. The method of claim 10, wherein the aqueous solution comprises distilled water or deionized water.

12. The method of any one of claims 6 to 11, wherein the purifying step comprises one or more aqueous washes.

13. The method of claim 12, wherein the aqueous wash is performed two times before the pigmentation step and two times after the pigmentation step.

14. The method of any one of claims 1 to 13, wherein the pigmentary phthalocyanine product is a chloroaluminum phthalocyanine.

## Patentansprüche

1. Ein Verfahren zur Herstellung von Roh-Phthalocyanin, umfassend:
Bereitstellen eines Reaktionsgemisches, enthaltend ein Phthalonitril, ein Metallhalogenid, ein Ammoniumsalz der Formel (NH₄)ₙX und ein Lösungsmittel, wobei:
X ausgewählt ist aus einem Halogenidion, einem Schwefel enthaltenden Ion, einem Stickstoff enthaltenden Ion, einem Carbonsäure enthaltenden Ion und einem Phosphor enthaltenden Ion;
n gleich 1 oder 2 ist; und
das Reaktionsgemisch keinen zugesetzten Schwermetallkatalysator enthält; und
Erwärmen des Reaktionsgemisches auf eine erhöhte Temperatur oberhalb Raumtemperatur, um ein rohes Phthalocyanin-Reaktionsprodukt herzustellen;
wobei das Metallhalogenid Aluminium(III)chlorid umfasst;
wobei das Lösungsmittel ein oder mehrere Lösungsmittel mit einem Siedepunkt von 150°C oder höher umfasst.

2. Das Verfahren gemäß Anspruch 1, wobei das Phthalonitril zusätzlich zu den zwei bereits vorhandenen benachbarten Nitrilgruppen substituiert ist mit bis zu vier Substituenten.

3. Das Verfahren gemäß einem der Ansprüche 1 bis 2, wobei das Molverhältnis von Ammoniumsalz zu Metallhalogenid von 0,1 : 1 bis 10 : 1 beträgt.

4. Das Verfahren gemäß einem der Ansprüche 1 bis 3, wobei der Schritt des Erwärmens durch Erwärmen des Reaktionsgemisches auf eine Temperatur, die auf mindestens 10°C über Raumtemperatur erhöht ist, über einen Zeitraum von mindestens 1 Stunde durchgeführt wird.

5. Das Verfahren gemäß einem der Ansprüche 1 bis 4, wobei das Reaktionsgemisch auf eine Temperatur, die auf mindestens 10°C über Raumtemperatur erhöht ist, bei einer Rate von 0,5°C/ Minute bis 5°C/Minute erwärmt wird.

6. Das Verfahren gemäß einem der Ansprüche 1 bis 5, weiter umfassend: Mahlen des rohen Phthalocyanin-Reaktionsprodukts in Gegenwart einer Mahlhilfe und eines Benetzungsmittels, um ein gemahlenes Phthalocyanin-Reaktionsprodukt zu erhalten; und Reinigen des gemahlenen Phthalocyanin-Reaktionsprodukts, um ein pigmentäres Phthalocyanin-Produkt zu erhalten.

7. Das Verfahren gemäß Anspruch 6, weiter umfassend das Reinigen des rohen Phthalocyanin-Reaktionsprodukts vor dem Mahlen.

8. Das Verfahren gemäß einem der Ansprüche 1 bis 7, wobei das rohe Phthalocyanin-Reaktionsprodukt im Wesentlichen frei von Schwermetall ist.

9. Das Verfahren gemäß einem der Ansprüche 6 bis 8, wobei das Mahlen über einen Zeitraum von 1 Stunde bis 8 Stunden durchgeführt wird.

10. Das Verfahren gemäß einem der Ansprüche 6 bis 9, wobei der Reinigungsschritt das Waschen mit einer wässrigen Lösung umfasst.

11. Das Verfahren gemäß Anspruch 10, wobei die wässrige Lösung destilliertes Wasser oder entionisiertes Wasser umfasst.

12. Das Verfahren gemäß einem der Ansprüche 6 bis 11, wobei der Reinigungsschritt ein oder mehr wässrige Wäschen umfasst.

13. Das Verfahren gemäß Anspruch 12, wobei das wässrige Waschen zweimal vor dem Pigmentierungsschritt und zweimal nach dem Pigmentierungsschritt durchgeführt wird.

14. Das Verfahren gemäß einem der Ansprüche 1 bis 13, wobei das pigmentäre Phthalocyanin-Produkt ein Chloraluminium-Phthalocyanin ist.

## Revendications

1. Méthode de préparation d'une phtalocyanine brute, comprenant :
la préparation d'un mélange réactionnel contenant un phtalonitrile, un halogénure métallique, un sel d'ammonium de formule (NH₄)ₙX, et un solvant, dans laquelle :
X est choisi parmi un ion halogénure, un ion contenant du soufre, un ion contenant de l'azote, un ion contenant un acide carboxylique, et un ion contenant du phosphore ;
n est 1 ou 2 ; et
le mélange réactionnel ne contient pas de catalyseur de métaux lourds ajouté ; et
le chauffage du mélange réactionnel jusqu'à une température élevée supérieure à la température ambiante pour obtenir un produit de réaction de phtalocyanine brute ;
dans laquelle l'halogénure métallique comprend du chlorure d'aluminium (III) ;
dans laquelle le solvant comprend un ou plusieurs solvants ayant un point d'ébullition de 150 °C ou plus.

2. Méthode selon la revendication 1, dans laquelle le phtalonitrile est substitué par jusqu'à quatre substituants en plus des deux groupes nitrile adjacents préexistants.

3. Méthode selon l'une quelconque des revendications 1 à 2, dans laquelle le rapport molaire du sel d'ammonium à l'halogénure métallique est de 0,1/1 à 10/1.

4. Méthode selon l'une quelconque des revendications 1 à 3, dans laquelle l'étape de chauffage est réalisée par chauffage du mélange réactionnel jusqu'à une température élevée d'au moins 10 °C supérieure à la température ambiante sur une période d'au moins 1 heure.

5. Méthode selon l'une quelconque des revendications 1 à 4, dans laquelle le mélange réactionnel est chauffé jusqu'à une température élevée d'au moins 10 °C supérieure à la température ambiante à une vitesse de 0,5 °C/minute à 5 °C/minute.

6. Méthode selon l'une quelconque des revendications 1 à 5, comprenant en outre : le broyage du produit de réaction de phtalocyanine brute en présence d'un adjuvant de broyage et d'un agent de mouillage pour obtenir un produit de réaction de phtalocyanine broyée ; et la purification du produit de réaction de phtalocyanine broyée pour obtenir un produit de réaction de phtalocyanine pigmentaire.

7. Méthode selon la revendication 6, comprenant en outre la purification du produit de réaction de phtalocyanine brute avant le broyage.

8. Méthode selon l'une quelconque des revendications 1 à 7, dans laquelle le produit de réaction de phtalocyanine brute est sensiblement exempt de métal lourd.

9. Méthode selon l'une quelconque des revendications 6 à 8, dans laquelle le broyage est réalisé pendant une période de temps de 1 à 8 heures.

10. Méthode selon l'une quelconque des revendications 6 à 9, dans laquelle l'étape de purification comprend le lavage avec une solution aqueuse.

11. Méthode selon la revendication 10, dans laquelle la solution aqueuse comprend de l'eau distillée ou de l'eau désionisée.

12. Méthode selon l'une quelconque des revendications 6 à 11, dans laquelle l'étape de purification comprend un ou plusieurs lavages aqueux.

13. Méthode selon la revendication 12, dans laquelle le lavage aqueux est réalisé deux fois avant l'étape de pigmentation et deux fois après l'étape de pigmentation.

14. Méthode selon l'une quelconque des revendications 1 à 13, dans laquelle le produit de phtalocyanine pigmentaire est une phtalocyanine de chloroaluminium.
